# EUROPÄISCHE PATENTANMELDUNG

(11) **EP 1 260 907 A1**
(43) Veröffentlichungstag der Anmeldung: **27.11.2002**
(21) Anmeldenummer: 01124655.0
(22) Anmeldetag: 16.10.2001
(51) Int. Cl.: G06F 12/06, G06F 9/445

(54) **Verfahren zur persistenten Speicherung von Daten**

(71) Anmelder: Siemens Schweiz AG, 8047 Zürich (CH)
(72) Erfinder: Schweizer, Walter, 8047 Zürich (CH); Jörg, Thomas, 8049 Zürich (CH); Martin, Stefan, 4600 Olten (CH)
(74) Vertreter: Berg, Peter, Dipl.-Ing.

(57) **Zusammenfassung**

Flash-Prom-Speicherbausteine können blockweise gelöscht und wieder neu beschrieben werden. Das Beschreiben eines Blockes darf jedoch nicht von Lesezyklyen auf den gleichen Baustein unterbrochen werden. Für ein Prozessorsystem, das vorzugsweise für tragbare Informations- und Kommunikationsgeräte vorgesehen ist, wird ein adressmässig zusammenhängenden Speicher vorgeschlagen, der in einen flüchtigen Schreiblesespeicher (RAM3) und einen nichtflüchtigen Lesespeicher (Flash1, Flash2) gegliedert ist. Der Lesespeicher (Flash1, Flash2) ist aus wenigstens zwei Speicherbausteinen (Flash1, Flash2) gebildet und je einzeln mit einer Steuerleitung (CS1, CS2) selektierbar. Beim Hochlauf des Prozessorsystems werden Teile des Betriebssystems vom ersten Lesespeicher (Flash1) in den Schreiblesespeicher (RAM3) kopiert, so dass in einem Block (B1j) des ersten Lesespeichers (Flash1) neu persistent zu speichernde Daten geschrieben werden können. Vorteilhafterweise enthalten die zu kopierenden Teile des Betriebssystems jene Prozeduren und Routinen, die häufig ausgeführt werden.

## Beschreibung

Die vorliegende Erfindung betrifft ein Verfahren zur persistenten Speicherung von Daten nach dem Oberbegriff des Patentanspruchs 1.

Tragbare Informations- und Datenverarbeitungsgeräte - oft als sogenannte PDA's (Personal Digital Assistant) bezeichnet - können wegen zu hohem Energiebedarf aber auch aus Gründen der Dimensionierung nicht mit Massenspeichern in der Art von Festplatten versehen werden. Um auf solchen PDA's Anwendungen mit einer bei Personalcomputern ähnlichen Benutzeroberfläche und Funktionalität ablaufen zu können, ist nebst einer hohen Prozessorleistung auch ein relativ hoher Speicherbedarf notwendig. Das dafür erforderliche Betriebssystem wie auch die Anwendungsprogramme selber müssen deshalb auf nichtflüchtigen Speicherbausteinen resident sein. Maskenprogrammierte Speicherbausteine haben den Nachteil, dass nur über einen Bausteinwechsel eine neue Version eines Programms installiert werden kann. Deshalb werden zunehmend sogenannte Flash-Prom-Speicherbausteine eingesetzt, deren typische Speicherkapazität einen Wert von 16 Mbyte aufweist. Flash-Prom-Bausteine sind dabei in Blöcken von z.B. 128 kByte organisiert. Ein solcher Block kann gesamthaft gelöscht und mit gegenüber herkömmlichen RAM-Bausteinen deutlich langsameren Schreibzyklen wieder neu beschrieben werden können. Zu beachten ist, das nur etwa 100.000 solcher Lösch- und Schreibzyklen möglich sind.

In CH 686 749 ist ein Verfahren zur optimalen Nutzung des direkt adressierbaren Speicherbereichs eines Prozessorsystems beschrieben, bei dem die nach dem Hochlauf erforderlichen Programmteile von einem ROM-Baustein adressgleich in den RAM-Speicherbereich kopiert werden und anschliessend durch eine Speicherbankschaltung im ursprünglichen ROM-Speicherbereich auch Lesezyklen im RAM-Speicherbereich möglich werden.

In EP 0 955 588 A1 ist ein Verfahren für "garbage collection" offenbart, das besonders für Prozessorsysteme mit begrenzten Ressourcen geeignet ist; wobei unter dem Begriff "begrenzte Ressource" insbesondere die Beschränkungen durch die Verwendung von Flash-Prom-Speicherbausteinen subsummiert sind.

Mit der Verwendung von Flash-Prom-Speicherbausteinen können PDA's über eine Draht- oder Funkschnittstelle mit neuen Versionen des Betriebssystems, von Anwendungsprogrammen oder mit neuen Treibern versorgt werden, dieser Vorgang wird auch als Update bezeichnet. Dazu ist ein Dateisystem erforderlich, das einerseits den Zugriff auf die Blöcke von Flash-Prom-Speicherbausteinen handhaben kann und andererseits mit dem eingesetzten Betriebssystem kompatibel ist. Beispielsweise sind dazu beim Betriebssystem Windows CE Einträge in die sogenannte Registry vorzunehmen, die angeben, welche Treiber und Anwendungsprogrammen im betreffenden Prozessorsystem verfügbar sind. Die Speicherung der Einträge der Registry wie auch jene der Treiber und Anwendungsprogramme muss persistent sein, d.h. die Daten müssen einen ungewollten oder gegebenenfalls gewollten Ausfall der Energieversorgung überleben. Eine Implementierung von solchen Dateisysteme muss dabei berücksichtigen, dass auf einen Flash-Prom-Speicherbaustein nicht gleichzeitig Schreib- und Lesezyklen möglich sind. Dazu ist es erforderlich, einen Verriegelungsmechanismus zu implementieren.

Der vorliegenden Erfindung liegt daher die Aufgabe zugrunde, ein Verfahren zur persistenten Speicherung von Daten anzugeben, so dass Updates von Betriebssystem, Anwendungsprogrammen und von Treibern trotz der Beschränkungen bei der Verwendung von Flash-Prom-Speicherbausteinen zuverlässig vorgenommen werden können.

Diese Aufgabe wird durch die im Patentanspruch 1 angegebenen Massnahmen gelöst. Vorteilhafte Ausgestaltungen der Erfindung sind in weiteren Ansprüchen angegeben.

Diese Aufgabe wird bezüglich des Verfahrens der eingangs genannten Art erfindungsgemäss dadurch gelöst, dass der Lesespeicher aus wenigstens zwei Speicherbausteinen gebildet und je einzeln mit einer Steuerleitung selektierbar ist, dass beim Hochlauf des Prozessorsystems Teile des Betriebssystems von einem Lesespeicher in den Schreiblesespeicher kopiert wird, so dass in einem Block des einen Lesespeichers neu persistent zu speichernde Daten geschrieben werden können.

Auf diese Weise ist ein Verfahren geschaffen, dass einerseits die Nachführung von Daten und Programmteilen in einem Lesespeicher ohne Verwendung eines Massenspeichers wie z.B. eine Harddisk erlaubt und andererseits eine Leistungssteigerung ermöglicht, da die Zugriffszeiten auf Schreiblesespeicher kürzer sind als auf Flash-Prom-Speicherbausteine.
i) Dadurch dass
   das Schreiben in einen Block des einen Lesespeichers durch eine Prozedur erfolgt, die selber in dem einen Lesespeicher resident ist, jedoch vor Ausführung in den Schreiblesespeicher kopiert wird;
   ist sichergestellt, dass das Prozessorsystem durch keine Fehlmanipulation eines Anwenders selber die für den Hochlauf benötigten Programmteile löscht und dadurch wird verhindert, dass das Prozessorsystem nicht mehr startbar ist (Patentanspruch 4).
ii) Dadurch dass
   dass häufig benutzte Teile des Betriebssystems in den zu kopierenden Teile des Betriebssystems enthalten sind; ergibt sich eine wesentliche Leistungssteigerung des Prozessorsystems ohne dass für das gesamte Betriebssystem Schreiblesespeicher zur Verfügung gestellt werden muss. Dadurch können die Aufwendungen für ein solches Prozessorsystem reduziert werden (Patentanspruch 5).
iii) Dadurch dass
   mittels einer Speicherverwaltungseinheit der für die Ausführung des Betriebssystems vorgesehene Speicherraum im Schreibelesespeicher und in einem Lesespeicher für nurlesenden Zugriff (ROM-Sect) konfiguriert ist; braucht es keine Eingriffe in das Betriebssystem, um Schreibzugriffe auf bestimmte Speicherbereiche auszuschliessen. (Patentanspruch 6).
iv) Dadurch dass
   wenigstens ein Block des ersten Lesespeichers nicht löschbar ist;
   ist die Verfügbarkeit des Prozessorsystems nicht beeinträchtigt, da so ein Hochlauf stets gesichert ist. (Patentanspruch 7).

Im Kontext persistente Speicherung von Daten gemäss der vorliegenden Erfindung werden unter dem Begriff Daten sowohl Programme, Treiber wie auch Konfigurationsdaten wie z.B. eine Registry und Benutzerdaten subsummiert.

Ausführungsbeispiele der Erfindung werden anhand einer Zeichnung näher erläutert. Dabei zeigen:
- Figur 1: Speicheranordnung zur Durchführung des erfindungsgemässen Verfahrens;
- Figur 2: Darstellung der verschiedenen Rücksetzarten;
- Figur 3: Darstellung der Abhängigkeiten bei einem Update von Treibern oder Anwendungsprogrammen.

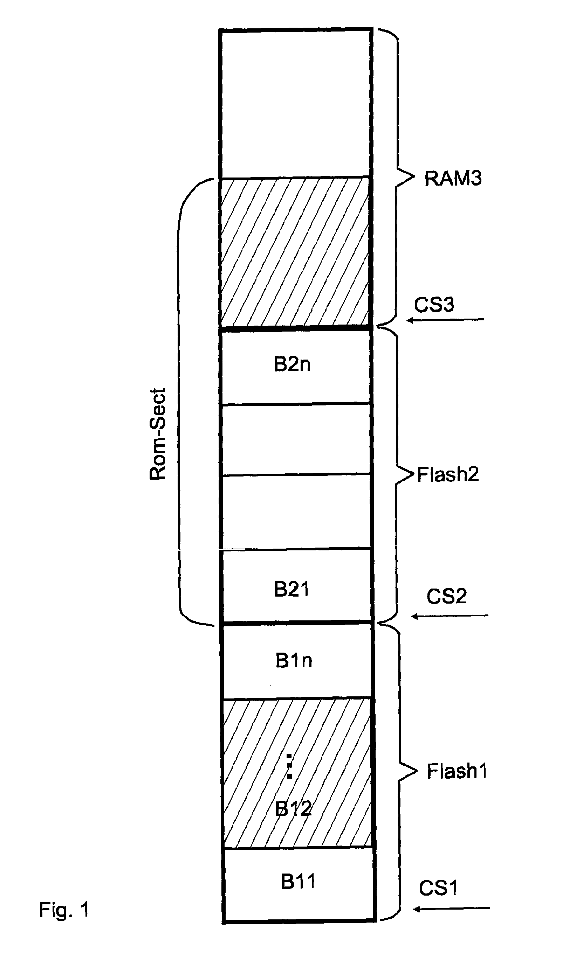

Figur 1 zeigt das Speicherlayout eines Prozessorsystems mit einen physischen Nurlesespeicherbereich, der adressmässig zwei aufeinanderfolgende Flash-Prom-Speicherbausteine Flash1 und Flash2 umfasst. Für die Ausführung der vorliegenden Erfindung ist es jedoch nicht zwingend, dass die Adressräume der beiden Flash-Prom-Speicherbausteine direkt aufeinanderfolgend sind, da dies mittels einer Speicherverwaltungeinheit (MMU Memory Management Unit) auch nachgebildet werden kann.

Die Auswahl der beiden Flash-Prom-Speicherbausteine Flash1 und Flash2 erfolgt über eine Steuerleitung CS1 bzw. CS2. Aufgrund der Adresse für einen Zugriff wird in einer Steuerlogik ein Signal für die betreffende Steuerleitung CS1, .. CS3 erzeugt. Für die Art des Zugriffs sind weitere Steuerleitungen wie z.B. RD (read) erforderlich, die nicht dargestellt sind. Jeder Flash-Prom-Speicherbaustein Flash1 bzw. Flash2 ist in n Speicherblöcke B11 .. B1n bzw. B21 .. B2n aufgeteilt. Nicht dargestellt sind die Leitungen für das Löschen eines Speicherblockes Bij, wobei i= 1, 2 und j= 1 .. n. Mit RAM3 ist ein Schreiblesespeicher dargestellt, der auch RAM-Speicher oder flüchtiger RAM-Speicher genannt wird. Die adressmässige Lage dieses RAM-Speichers RAM3 ist dabei unmittelbar an den zweiten Flash-Prom-Speicherbaustein Flash2 angrenzend, die Grösse dieses RAM-Speichers RAM3 richtet sich nach den Erfordernissen der Anwendung. Zur Ausführung der vorliegenden Erfindung ist es nicht erforderlich, dass der aus Flash-Prom-Speicherbaustein Flash2 - im folgenden nur Lesespeicher genannt - sowie aus dem Schreiblesespeicher RAM3 gebildete Adressraum zusammenhängend ist. Ein zusammenhängender Adressraum kann mittels der vorerwähnten Speicherverwaltungseinheit MMU nachgebildet werden. Dies ist auch deshalb möglich, falls ein Prozessor verwendet wird, bei dem die Ausführung des Codes unabhängig von der Lage des Codes im Adressraum ist, dies wird als sogenannter positionsunabhängiger Code bezeichnet.

Im ersten Flash-Prom-Speicherbaustein Flash1 sind in den Blöcken B11 .. B1n adressmässig absteigend beispielsweise folgende Teile enthalten:
B1n Persistentes Dateisystem
B12 .. Betriebssystem + Kernel,
B11 Boot Loader.

Je nach Funktionalität des Boot Loaders - ein Boot Loader ist ein Urprogramm zum Hochlauf des Prozessorsystems - können hierfür auch mehr als ein Block des ersten Lesespeichers Flash1 vorgesehen werden.

Im zweiten Lesespeicher Flash2 sind die weiteren Teile des Betriebssystems sowie der Anwendungsprogramme abgelegt; im folgenden wird für die persistente Speicherung von Daten kein Unterschied gemacht zwischen Betriebssystem und Anwendungsprogramm. Bei der Produktion (Build) des Betriebssystems ist darauf zu achten, dass der sogenannte Kernel wie auch häufig benutzte weitere Prozeduren und Bibliotheken - Bibliotheken sind sogenannte sogenannte Direct Link Libraries (.DLL) adressmässig so angelegt werden, dass sie im ersten Flash-Prom-Speicherbaustein zu liegen kommen. Beim Hochlauf des Prozessorsystems werden die vorgenannten Betriebssystemteile B12 .. in den RAM-Speicher kopiert und mittels einer Einstellung in der erwähnten Speicherverwaltung MMU des Prozessors wird dem Betriebssystem mitgeteilt, dass der Lesespeicher Flash2 zuzüglich des kopierten Bereiches im RAM-Speicher (schraffiert dargestellt) als sogenannte ROM-Sektion zu behandeln ist. In einer solchen ROM-Sektion werden dann vom Betriebssystem keine Schreibzugriffe vorgenommen. Das Kopieren des vorgenannten Bereiches B12 .. hat zwei Vorteile:
i) Das Betriebssystem benötigt selber keine Lesezugriffe mehr auf den ersten Flash-Prom-Speicherbaustein Flash1 auszuführen, dadurch können in diesem Speicherbaustein Updates vorgenommen werden, ohne dass für das Betriebssystem selber eine Verriegelung vorgenommen werden muss.
ii) Die Zugriffszeiten auf den RAM-Speicher sind wesentlich kürzer als auf einen Flash-Prom-Speicherbaustein, so dass in der Regel keine Wartezyklen (Wait-States) erforderlich sind. Dadurch wird das Prozessorsystem mit dem erfindungsgemässen Verfahren zur Speicherung von persistenten Daten erheblich leistungsfähiger.

Für die Erläuterung des erfindungsgemässen Verfahrens zur persistenten Speicherung von Daten wird als Beispiel die sogenannte Registry herangezogen. Das ist eine Datenbank, in der die verfügbaren Anwendungen und Treiber für einen Benutzer einschliesslich seiner Rechte gespeichert sind. Es sind folgende Arten der Registry zu unterscheiden:
i) Default Registry, im Betriebssystem (Image) abgelegt;
ii) Persistente Registry in einem speziellen Bereich im ersten Lesespeicher Flash1 abgelegt;
iii) Aktive Registry, die für einen Benutzer momentan aktive Registry, im RAM-Speicher abgelegt; nach einem erfolgreichen Anmelden eines Benutzers wird eine persistente Registry in den Schreiblesespeicher RAM3 kopiert und wird dadurch zur aktiven Registry.

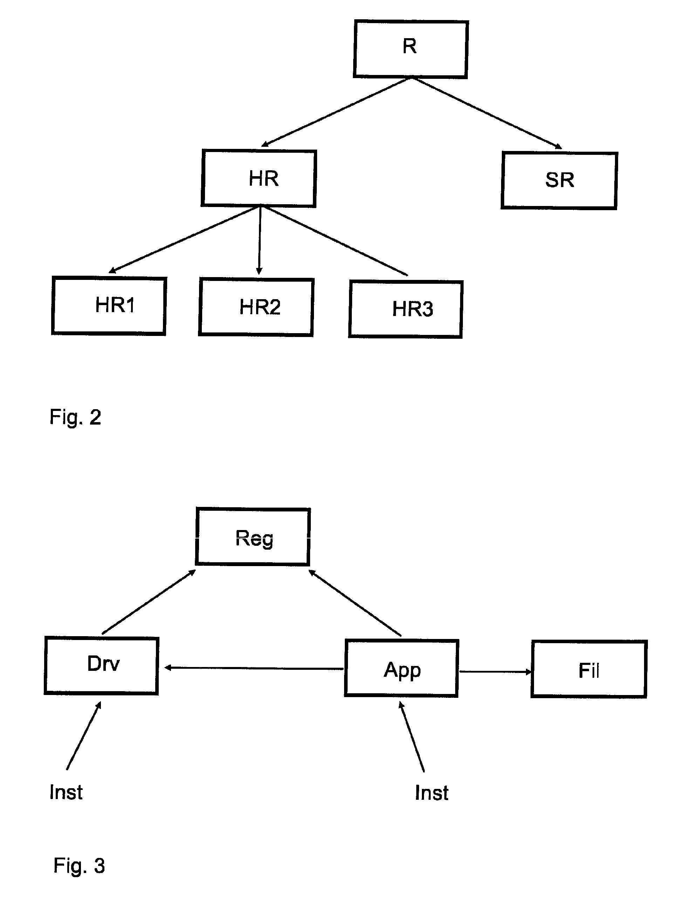

Anhand der Figur 2 werden die verschiedenen Rücksetzarten und die Auswirkungen auf in Flash-Prom-Speicherbausteinen gespeicherte Daten erläutert. Abhängig von der Art der durch den Anwender ausgelösten Hardware-Resets folgende in Tabelle 1 dargestellte drei Fälle auf:

**Tabelle 1**

| **Bezeichnung** | **Auswirkung** |
|---|---|
| HR1 Warmstart | Persistente Registry wird nicht geladen. |
| HR2 Kaltstart | Persistente Registry wird geladen. |
| HR3 Factory-Reset | Persistente Registry wird gelöscht. |

Die Angabe "laden" beinhaltet das Kopieren von einem Block B1j (j= 1, .., n) des ersten Lesespeichers Flash1 in den Schreiblesespeicher RAM3, so dass dort dadurch eine aktive Registry angelegt ist. Bei einem Software-Reset, der durch den Benutzer über das "Startmenü" ausgelöst wird, bleibt die aktive Registry erhalten. Bei einem Warmstart wird die persistente Registry deshalb nicht geladen, weil sie gegenüber der persistenten Registry einen aktuelleren Stand aufweist.

Die Feststellung, ob eine Registry noch im RAM-Speicher als aktive Registry oder im Flash-Prom-Speicher Flash1 als persistente Registry noch vorhanden ist, erfolgt über eine sogenannte Magic-Number, die an einer bestimmten Stelle der Registry selber eingetragen ist. Da die persistente Registry in einem Block des ersten Flash-Prom-Speicherbausteins enthalten ist, kann dadurch festgestellt werden, ob sich diese Registry in einem gelöschten Block befindet, da nach einem Löschen eines Blockes dieser nur binäre Einsen "1" oder in hexadezimaler Darstellung den Wert 0FFH enthält.

In der Figur 3 sind die durch Betriebssystem und Installation erfolgenden Interaktionen dargestellt, die bei einem Update eines Treibers oder eines Anwendungsprogramms auftreten. Zur Installation eines Treibers wird dieser selbst in einem Block des ersten Lesespeichers Flash1 eingetragen. Dabei ist zusätzlich ein Eintrag in die aktive Registry erforderlich, die sich im Schreiblesespeicher RAM3 befindet. Die Installation eines Programms erfolgt auf die gleiche Weise, unterschiedlich zur Treiber Installation können noch zusätzliche Dateien erforderlich sein, die ebenfalls im ersten Lesespeicher Flash1 eingetragen werden.

Für das Beschreiben eines Blockes in einem Flash-Prom-Speicherbaustein ist der Zugriff auf den betreffenden Baustein so zu verriegeln, dass in dieser Zeit des Schreibens kein anderer Prozess einen lesenden Zugriff auf den gleichen Baustein unternimmt. Dazu muss mittels einer Dienstroutine -auch Prozedur - genannt, die vom Betriebssystem aufgerufen wird, das Interruptsystem gesperrt werden. Auf die gleiche Weise erfolgt auch ein Zurückschreiben einer aktiven Registry in den ersten Lesespeicher Flash1, die in diesem dann als persistente Registry abgelegt wird. Dies erfolgt entweder beim Abmelden eines Benutzers (logout) oder auf eine gezielte Interaktion eines Benutzers mit Menus der Art: "save Registry" oder "save user data", usw.

Das mit "Boot loader" bezeichnete Programm muss so ausgeführt sein, dass es sich selber gegen das Löschen des eigenen Blockes schützt. Vorteilhafterweise sind die Prozeduren zum Löschen und Beschreiben von Blöcken des Lesespeichers ebenfalls Teil des sogenannten "Boot loaders", jedoch muss dieser Teil für die Ausführung ebenfalls in den Schreiblesespeicher RAM3 kopiert werden, um keine Kollision mit dem quasigleichzeitigen schreibenden und lesenden Zugriff auf den ersten Lesespeicher Flash1 zu erzeugen. Fetch-Zyklen sind auf der Ebene der Speicherbausteine Lesezyklen.

Das erfindungsgemässe Verfahren ist auch für mehr als zwei Lesespeicher anwendbar. In einer weiteren Ausführungsform ist es auch möglich, das Betriebssystem- und die Anwendungsprogramme insgesamt auf einem Schreiblesespeicher auszulagern um dadurch eine höhere Performance des Prozessorsystems zu erreichen und mittels eines Journallings gezielt einzelne Blöcke des Lesespeichers aktualisieren zu können. Das Journailing ist notwendig, um bei einem nicht vorhergesehenen Abbruch der Aktualisierung, den vorhergehenden Zustand wiederherstellen zu können.

### Bezugszeichenliste

- App: Anwendungsprogramm, Applikation
- B11 ..B1n: Blöcke des ersten Flash-Prom-Speicherbausteins Flashl
- B12 .. B2n: Blöcke des zweiten Flash-Prom-Speicherbausteins Flash2
- CS1: Steuerleitung zur Auswahl des ersten Flash-Prom-Speicherbausteins Flashl, Chip Select 1
- CS2: Steuerleitung zur Auswahl des zweiten Flash-Prom-Speicherbausteins Flash2, Chip Select 2
- CS3: Steuerleitung zur Auswahl eines Schreib/Lesespeichers RAM3, Chip Select 3
- Drv: Software-Treiber, Driver
- Fil: Dateisystem
- HR: Hardware-Reset
- HR1: Warmstart
- HR2: Kaltstart
- HR3: Factory-Reset
- Flash1: Erster Flash-Prom-Speicherbaustein, Lesespeicher
- Flash2: Zweiter Flash-Prom-Speicherbaustein, Lesespeicher
- Inst: Installation eines Treibers oder eines Anwendungsprogramms
- R: Rücksetzen, Reset
- RAM3: Schreiblesespeicher, flüchtiger RAM-Speicher
- Reg: Registry
- SR: Software-Reset

## Patentansprüche

1. Verfahren zur persistenten Speicherung von Daten in einem Prozessorsystem, das einen Prozessor und einen Speicher enthält, der in einen flüchtigen Schreiblesespeicher (RAM3) und einen nichtflüchtigen Lesespeicher (Flash1, Flash2) gegliedert ist, wobei der Lesespeicher (Flash1, Flash2) in Blöcke (Bi1, .., Bin) organisiert ist, die einzeln gelöscht und nachfolgend einzeln persistent beschrieben werden können und wobei im Lesespeicher (Flash1, Flash2) ein Betriebssystem gespeichert ist,
**dadurch gekennzeichnet, dass**
der Lesespeicher (Flash1, Flash2) aus wenigstens zwei Speicherbausteinen (Flash1, Flash2) gebildet und je einzeln mit einer Steuerleitung (CS1, CS2) selektierbar ist, dass beim Hochlauf des Prozessorsystems Teile des Betriebssystems von einem Lesespeicher (Flash1) in den Schreiblesespeicher (RAM3) kopiert wird, so dass in einem Block (Bij) des einen Lesespeichers (Flash1) neu persistent zu speichernde Daten schrieben werden können.

2. Verfahren nach Anspruch 1,
**dadurch gekennzeichnet, dass**
der in den flüchtigen Schreiblesespeicher (RAM3) und den nichtflüchtigen Lesespeicher (Flash1, Flash2) gegliederte Speicher adressmässig zusammenhängendend ist.

3. Verfahren nach Anspruch 1 oder 2,
**dadurch gekennzeichnet, dass**
das Schreiben in einen Block (B1j) des einen Lesespeichers (Flash1) so verriegelt ist, dass während dem Beschreiben kein anderer Prozess einen lesenden Zugriff auf diesen einen Lesespeicher (Flash1) ausführen kann.

4. Verfahren nach Anspruch 3,
**dadurch gekennzeichnet, dass**
das Schreiben in einen Block (B1j) des einen Lesespeichers (Flash1) durch eine Prozedur erfolgt, die selber in diesem einen Lesespeicher (Flash1) resident ist, jedoch vor Ausführung in den Schreiblesespeicher (RAM3) kopiert wird.

5. Verfahren nach einem der Ansprüche 1 bis 4,
**dadurch gekennzeichnet, dass**
dass häufig benutzte Teile des Betriebssystems in den zu kopierenden Teile des Betriebssystems enthalten sind.

6. Verfahren nach einem der Ansprüche 1 bis 5,
**dadurch gekennzeichnet, dass**
mittels einer Speicherverwaltungseinheit der für die Ausführung des Betriebssystems vorgesehene Speicherraum im Schreibelesespeicher (RAM) und in einem Lesespeicher (Flash2) für nurlesenden Zugriff (ROM-Sect) konfiguriert ist.

7. Verfahren nach einem der Ansprüche 1 bis 6,
**dadurch gekennzeichnet, dass**
wenigstens ein Block (B11) des einen Lesespeichers (Flash1) nicht löschbar ist.
